# EUROPEAN PATENT APPLICATION

(11) **EP 2 429 187 A2**
(43) Date of publication of application: **14.03.2012**
(21) Application number: 11163185.9
(22) Date of filing: 20.04.2011
(51) Int. Cl.: H04N 5/64

(54) **Television and electronic device**

(30) Priority: 09.09.2010 JP 2010202450
(71) Applicant: Kabushiki Kaisha Toshiba, Minato-ku Tokyo 105-8001 (JP)
(72) Inventor: Oikawa, Shinichiro, Tokyo (JP)
(74) Representative: Henkel, Breuer & Partner

(57) **Abstract**

In one embodiment, there is provided a television that includes: a display comprising a display screen; a support pillar that supports the display and configured to rotate in a circumferential direction thereof; a metal base comprising a plurality of first through openings formed therethrough, the metal base comprising: a first face that faces the support pillar; and a second face opposite to the first face; a glass member disposed between the support pillar and the first face of the metal base, the glass member comprising a plurality of second through openings that are formed therethrough and are each in communication with a corresponding one of the first through openings; a resin member disposed between the support pillar and the glass member, the resin member comprising a plurality of insertion portions each inserted into a corresponding one of the second through openings; and a plurality of fixing members that pass through the first through openings and the second through openings from the second face of the metal base so as to fix together the resin member, the glass member, the metal base and the support pillar, the plurality of fixing members being separated from separated from the glass member by the plurality of insertion portions of the resin member.

## Description

Embodiments described herein relate to a television and an electronic device.

### BACKGROUND

A slim television, for example an LCD television, is provided with a display for displaying the picture and a stand. The stand supports the display on, for example, a placement face of a television rack.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention:
Fig. 1 is a perspective view showing an LCD television according to an exemplary embodiment;
Fig. 2 is a perspective view showing an LCD television, as seen from the rear;
Fig. 3 is a side view of an LCD television;
Fig. 4 is a perspective view showing an LCD television stand as seen from below;
Fig. 5 is a perspective exploded diagram of the CD television stand;
Fig. 6 is an exploded cross-section of the CD television stand; and
Fig. 7 is a cross-section of the CD television stand.

### DETAILED DESCRIPTION

According to exemplary embodiments of the present invention, there is provided a television. The television includes: a display comprising a display screen; a support pillar that supports the display and configured to rotate in a circumferential direction thereof; a metal base comprising a plurality of first through openings formed therethrough, the metal base comprising: a first face that faces the support pillar; and a second face opposite to the first face; a glass member disposed between the support pillar and the first face of the metal base, the glass member comprising a plurality of second through openings that are formed therethrough and are each in communication with a corresponding one of the first through openings; a resin member disposed between the support pillar and the glass member, the resin member comprising a plurality of insertion portions each inserted into a corresponding one of the second through openings; and a plurality of fixing members that pass through the first through openings and the second through openings from the second face of the metal base so as to fix together the resin member, the glass member, the metal base and the support pillar, the plurality of fixing members being separated from separated from the glass member by the plurality of insertion portions of the resin member.

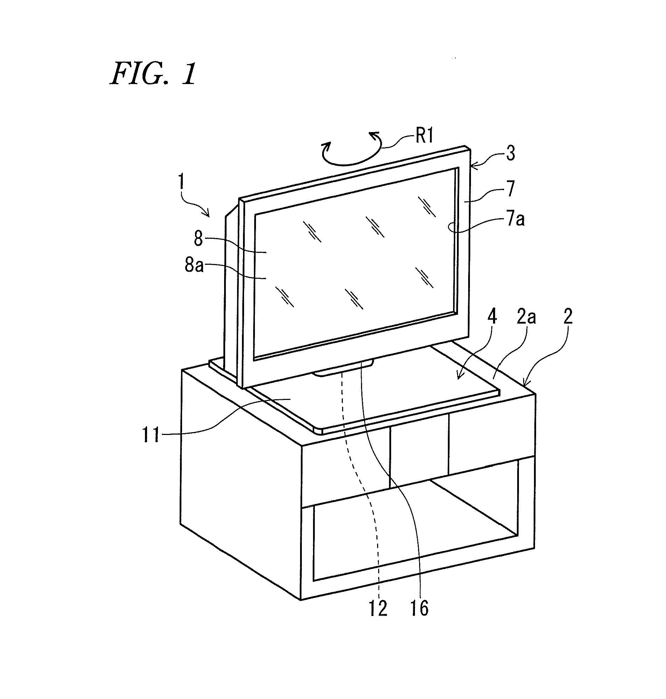

Explanation follows regarding an exemplary embodiment, with reference to Fig. 1 to Fig. 7. Directions are defined in the specification as: the near-side (namely the user's side) is the front; the far side with respect to a user is the rear; the left side as seen by a user is the left; the right side as seen by a user is the right; the up direction as seen by a user is above: and the bottom direction as seen by a user is below.

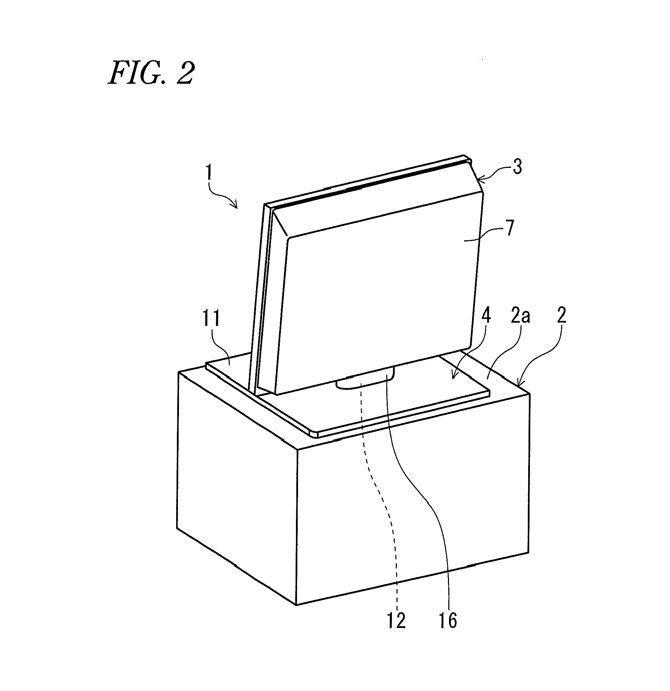

Fig. 1 is a perspective view showing an LCD television 1 according to an exemplary embodiment. Fig. 2 is a perspective view of the LCD television 1 as viewed from the rear. The LCD television 1 is an example of a television and an electronic device. As shown in Fig 1, the LCD television 1 is, for example, placed on a mounting face 2a of a television rack 2. The LCD television 1 includes a display 3 and a stand 4.

The display 3 includes a flat casing 7 and a liquid crystal display (LCD) panel 8. The LCD panel 8 is housed in the casing 7. The LCD panel 8 includes a display screen 8a for displaying a picture. The display screen 8a is externally exposed from the casing 7 through a display opening 7a provided in the casing 7. The display 3 also includes an internal television tuner and internal speakers, and has plural cable connections. The display 3 is rotatable in the direction shown by arrow R1 in Fig. 1 by means of the stand 4.

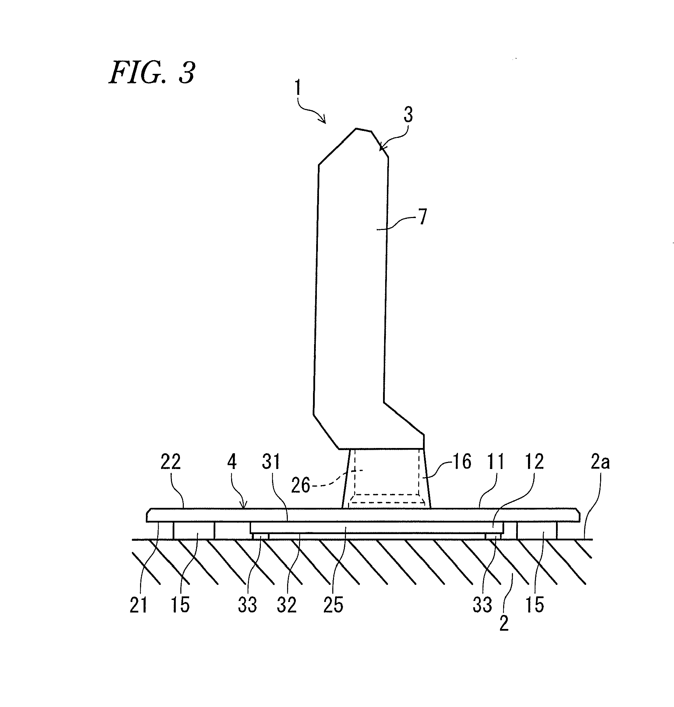

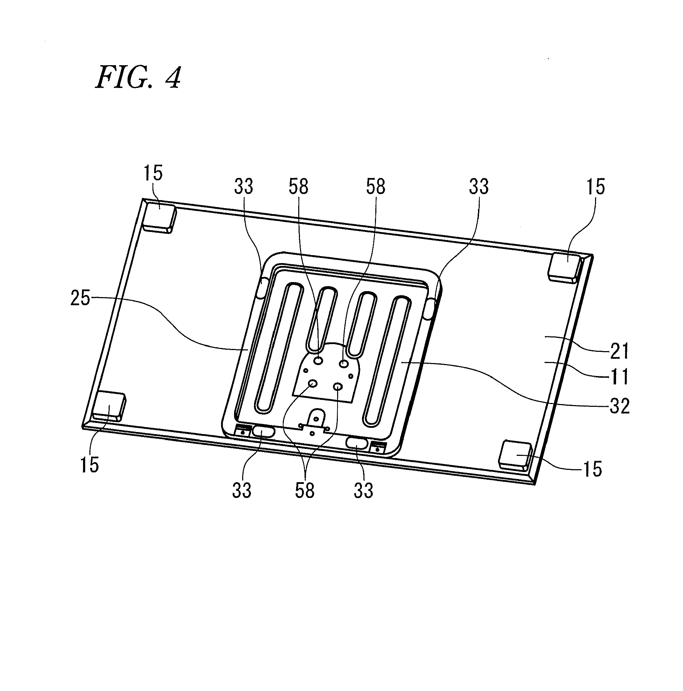

Fig. 3 is a side view of the LCD television 1. Fig. 4 is a perspective view of the stand 4 as seen from below. The stand 4 includes a cover member (glass member) 11, a support 12, four first rubber legs 15 and a support pillar cover 16. The support 12, the first rubber legs 15, and the support pillar cover 16 are each attached to the cover member 11.

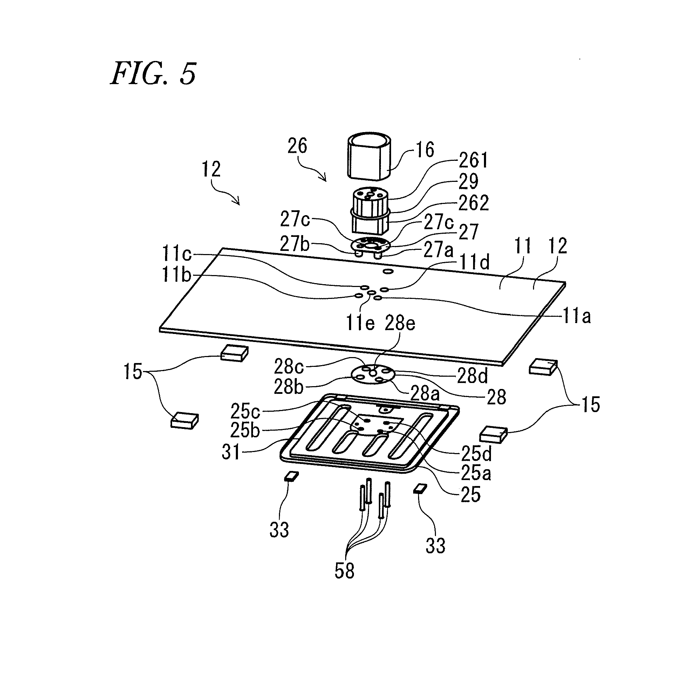

Fig. 5 is an exploded perspective view showing the stand 4. The cover member 11 is configured by a rectangular glass plate, for example, as shown in Fig. 5. The cover member 11 has a bottom face 21 and a top face 22. An insertion through hole 23 is provided in the cover member 11.

As shown in Fig. 3, the bottom face 21 of the cover member 11 and the mounting face 2a of the television rack 2 face each other. The top face 22 is positioned on the opposite side of the cover member 11 to that of the bottom face 21. The top face 22 faces towards the display 3. The cover member 11 is, for example, a plate made of glass blocking light travelling in the thickness direction of the cover member 11 due to paint coated on the surface of the glass. The cover member 11 has openings 11a, 11b, 11c, 11d, 11e. The openings 11a, 11b, 11c, 11d are arranged around the opening 11e, with the opening 11e at the center.

The openings 11a, 11b, 11c, 11d are provided from the bottom face 21 through to the top face 22. The first rubber legs 15 are fixed to the bottom face 21, for example with double-sided adhesive tape. The first rubber legs 15 are each disposed at one of four corners 11 a of the cover member 11. The first rubber legs 15 are in contact with the mounting face 2a and support the cover member 11.

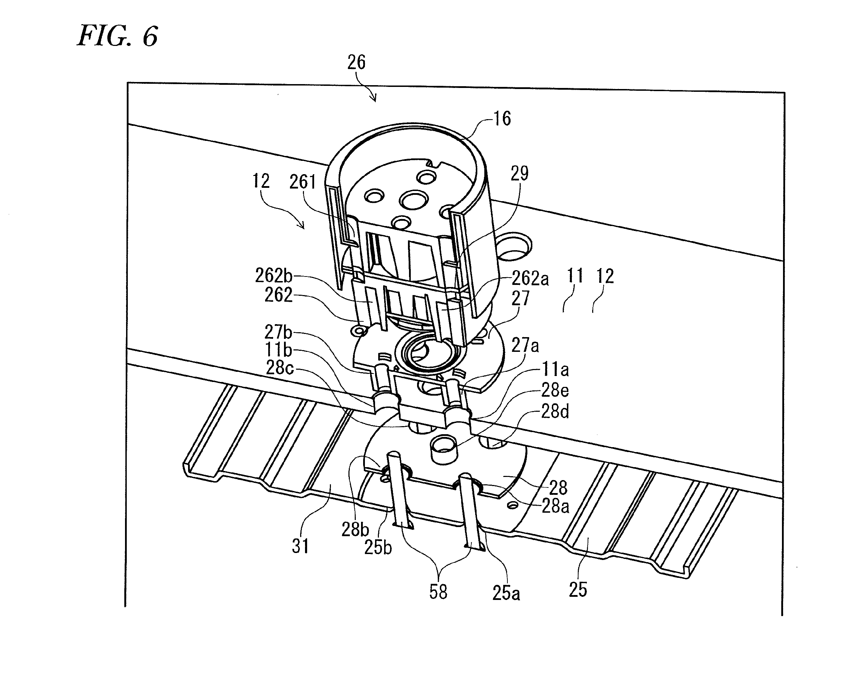

Fig. 6 is an exploded cross-section of the support 12 shown in Fig. 5. As shown in Fig. 5 and Fig. 6, the support 12 includes a base 25, a support pillar 26, a first shock absorbing member 27, a second shock absorbing member 28, and a rotation section 29. The support pillar 26 includes a first section 261 and a second section 262. The first section 261 and the second section 262 are joined together through the rotation section 29 disposed therebetween. The second section 262 has openings 262a, 262b, 262c, 262d. Portions of screws 58 are respectively housed (threaded into) the openings 262a, 262b, 262c, 262d.

The base 25 has openings 25a, 25b, 25c, 25d. The openings 25a, 25b, 25c, 25d, the openings 262a, 262b, 262c, 262d, and the openings 11a, 11b, 11c, 11d are in mutual communication with each other. Namely, the screws 58 are threaded into the second section 262 openings of the pillar 26 through the cover member 11 openings and the base 25 openings.

The first shock absorbing member 27 is provided with insertion portions 27a, 27b, 27c, 27d projecting out towards the cover member 11. The insertion portions 27a, 27b, 27c, 27d are respectively inserted into the openings 11a, 11b, 11c, 11d. The second shock absorbing member 28 is provided with an insertion portion 28e projecting out towards the cover member 11. The insertion portion 28e is inserted into the opening 11e. The present exemplary embodiment is thus configured such that the first shock absorbing member 27 and the second shock absorbing member 28 can be firmly assembled and fixed to the cover member 11 from above and below, respectively.

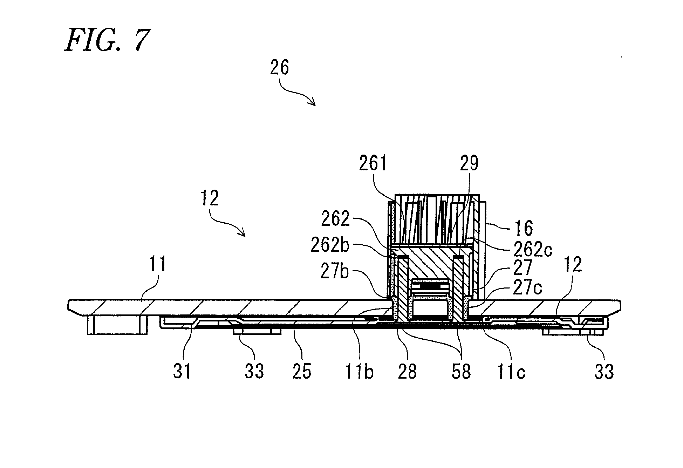

As shown in Fig. 7, the support 12 is configured from plural components, however, in order to support the display 3 these components need to be firmly fixed and integrated together. In order to strengthen the connection between components in the support 12, the base 25 and the support pillar 26 need to be firmly screwed together with the cover member 11 in the middle using the screws 58. Without provision of the first shock absorbing member 27 and the second shock absorbing member 28, a configuration would result in which the top face of the cover member 11 contacts the support pillar 26, the bottom face of the cover member 11 contacts the base 25, and the screws 58 respectively contact the inside of the openings 11a, 11b, 11c, 11d. This would lead to the possibility of damage and defects occurring if the cover member 11 configured from glass material were to be pressed by the more robust metal components from 3 directions.

However, in the electronic device of the present exemplary embodiment, the first shock absorbing member 27 and the second shock absorbing member 28 are respectively interposed between the cover member 11 made of glass and the base 25 made of metal, the support pillar 26 made of metal, and the screws 58 made of metal, thereby preventing direct interaction between these components. The first shock absorbing member 27 and the second shock absorbing member 28 are configured, for example, from a resin material such a plastic. By employing such a configuration, the glass component can be separated from the metal components in the support 12, and damage to the glass component can be suppressed.

As shown in Fig. 5 to Fig. 7, in the present exemplary embodiment the rotation section 29 is on the display 3 side with respect to both the bottom face of the base 25 and the cover member 11. Were, for example, the rotation section 29 to be provided so as to be exposed from the bottom face of the base 25, there is a possibility of dust from the surface on which the electronic device was placed penetrating into the mechanism of the rotation section 29 and preventing smooth rotation. However, according to the present exemplary embodiment, the rotation section 29 is protected from external dust by being disposed on the display 3 side of both the base 25 and the cover member 11, and by the rotation section 29 being covered by the support pillar cover 16. Namely, not only can reduction in rotation ability arising from damage to the mechanism of the rotation section 29 be suppressed, an improvement in external appearance can also be achieved.

The base 25 includes a first face 31, a second face 32 and plural second rubber legs 33. The first face 31 faces the cover member 11. As shown in Fig. 3, the second face 32 is disposed on the opposite side of the base 25 to that of the first face 31, facing the mounting face 2a.

The second rubber legs 33 are fixed to the second face 32 of the base 25, for example using double-sided adhesive tape. As shown in Fig. 3, the second rubber legs 33 contact the mounting face 2a on which the base 25 is placed. The second rubber legs 33 support the base 25.

The support pillar 26 is supported by the base 25. The support pillar 26 supports the display 3. The second rubber legs 33 of the base 25 contact the mounting face 2a. The display 3 is thereby supported by the base 25 through the support pillar 26. The base 25 and the support pillar 26 support the display 3 independently from the cover member 11 glass plate. Hence, even supposing the cover member 11 was to be damaged, the LCD television 1 can be prevented from toppling over due to the base 25 supporting the display 3.

The base 25 is covered by the cover member 11 glass plate. The external appearance of the LCD television 1 is thus improved. The cover member 11 is also fixed to the first face 31 of the base 25. The cover member 11 is supported by the four first rubber legs 15. Accordingly, stability of the base 25 is increased, and stability of the LCD television 1 is raised.

When the support pillar 26 is rotated, friction only occurs at the portions designed therefor, since rotation of the first shock absorbing member 27 is prevented. For example, friction occurs at the opposing faces of a support portion 42 of the support pillar 26 and a support portion 42 of the first shock absorbing member 27. There is, however, no friction between the base 25 and the face of the first shock absorbing member 27 opposing the base 25. Dust generation can thus be prevented from locations other than where expected.

Note that there is no limitation to the above exemplary embodiment, and various modifications may be implemented within a scope not departing from the spirit. For example, application is not limited to an LCD television, and application can be made to a display device for a personal computer.

While in the above exemplary embodiment the insertion portions 27a, 27b, 27c, 27d are provide to the first shock absorbing member 27 projecting out towards the cover member 11, and the insertion portion 28e is provided to the second shock absorbing member 28 projecting out towards the cover member 11, there is no limitation thereto. Any configuration may be made that separates the cover member 11 made from glass from other components made from metal materials, for example, the insertion portions 27a, 27b may be provided to the second shock absorbing member 28.

While certain embodiments have been described, these embodiments have been presented by way of example only, and are not intended to limit the scope of the invention. Indeed, the novel methods and systems described herein may be embodied in a variety of other forms. Furthermore, various omissions, substitutions and changes in the form of the methods and systems described herein may be made without departing from the sprit of the invention. The accompanying claims and their equivalents are intended to cover such forms or modifications as would fall within the scope and sprit of the invention.

## Claims

1. A television comprising:
a display comprising a display screen;
a support pillar that supports the display and configured to rotate in a circumferential direction thereof;
a metal base comprising a plurality of first through openings formed therethrough, the metal base comprising: a first face that faces the support pillar; and a second face opposite to the first face;
a glass member disposed between the support pillar and the first face of the metal base, the glass member comprising a plurality of second through openings that are formed therethrough and are each in communication with a corresponding one of the first through openings;
a resin member disposed between the support pillar and the glass member, the resin member comprising a plurality of insertion portions each inserted into a corresponding one of the second through openings; and
a plurality of fixing members that pass through the first through openings and the second through openings from the second face of the metal base so as to fix together the resin member, the glass member, the metal base and the support pillar, the plurality of fixing members being separated from separated from the glass member by the plurality of insertion portions of the resin member.

2. The television of claim 1, wherein each of the insertion portions is formed in a circular cylindrical shape to cover an internal face of the corresponding second through opening.

3. The television of claim **2**, wherein the metal base contacts a mounting surface on which the metal base is placed so as to support the support pillar.

4. The television of claim **3** further comprising:
a second resin member disposed between the metal base and the glass member.

5. The television of claim **3**, wherein each of the fixing members is a screw that passes through the second through opening from the second face of the metal base and screws into an inside of the first through opening of the support pillar.

6. The television of claim **3,** wherein the support pillar is configured to rotate in a circumferential direction of the metal base.

7. An electronic device comprising:
a display comprising a display screen;
a support pillar that supports the display and configured to be rotate in a circumferential direction thereof;
a base comprising a plurality of first through openings formed therethrough, the base comprising: a first face and a second face opposite to the first face;
a glass member disposed between the support pillar and the first face of the base, the glass member comprising a plurality of second through openings that are formed therethrough and are each in communication with a corresponding one of the first through openings;
a plurality of fixing members that pass through the second through openings from the second face of the base and join to the first through openings of the support pillar so as to fix together the base and the support pillar; and
a shock absorbing member disposed between the fixing members and the glass member so as to separate the fixing members from the glass member.

8. The electronic device of claim **7,** further comprising:
a second shock absorbing member disposed between the base and the glass member.

9. The electronic device of claim **8,** wherein the support pillar is configured to rotate in a circumferential direction of the base.

10. An electronic device comprising:
a display;
a support that supports the display;
a rigid base comprising a plurality of connection portions connected to the support at a face of the rigid base opposite to the other face of the rigid base that faces the display;
a decorative member disposed between the rigid base and the support; and
a shock absorbing member disposed between the decorative member and the plurality of connection portions.
